Europäisches Patentamt

**European Patent Office**

Office européen des brevets

(19)

(11) Publication number: **0 102 646**
**A1**

(12)

# EUROPEAN PATENT APPLICATION

(21) Application number: **83108785.3**

(22) Date of filing: **06.09.83**

(51) Int. Cl.³: **B 23 P 23/00**
**B 21 D 28/06**

(30) Priority: **07.09.82 US 415599**

(43) Date of publication of application:
**14.03.84 Bulletin 84/11**

(84) Designated Contracting States:
**BE CH DE FR GB IT LI SE**

(71) Applicant: **HOUDAILLE INDUSTRIES, INC.**
**1 Financial Plaza**
**Fort Lauderdale Florida 33394(US)**

(72) Inventor: **Korkowicz, Gerald P.**
**1234 Lambert Drive**
**Alden New York 14004(US)**

(72) Inventor: **Stein, Richard M.**
**119 South Parkway**
**Lancaster New York 14086(US)**

(74) Representative: **Fleuchaus, Leo, Dipl.-Ing. et al,**
**Fleuchaus & Wehser Melchiorstrasse 42**
**D-8000 München 71(DE)**

(54) **Combined shear and punch press.**

(57) An automatic computer controlled sheet material machine tool is disclosed, including a multi-tool punching machine and a right angle shear which are positioned closely adjacent one another and which are fed workpieces from a common worktable equipped with a computer controlled power workpiece movement gripper and carriage assembly, such that the workpiece is only gauged once and may thereafter be moved for precise controlled presentation to both the punch and the shear without the necessity of removing the workpiece from the table or regauging. Also shown is a system for automatically loading the workpiece and gauging initially under control of the computer and a system for automatically delivering completed workpieces and separation of scrap from the completed workpieces.

EP 0 102 646 A1

Croydon Printing Company Ltd

Fig. 1

1

COMBINED SHEAR AND PUNCH PRESS

DESCRIPTION

This invention relates to machine tools and more particularly to sheet material punching and shearing tools.

Computer controlled punches have been available for a number of years. Since machines commonly include a frame member, or frame members, carrying punch and die tools and a reciprocating ram and which may include rotating turrets carrying the tools selectively locatable at a work station under the ram. The devices also include worktables positioned adjacent the frame, or carried by the frame, with automatic workpiece movement devices for moving a workpiece over the worktable to selectively position various portions thereof at the work station for action thereon by the tools. Workpiece positioning apparatus have included moveable carriages which are moveable towards and away from the work station and which in turn carry moveable grippers which move sideways of the work station, whereby the workpieces move through the X and Y axes. The workpiece movement system and the ram, and turrets, if the machine is equipped with turrets, are all under control of a central computer.

More recently, the central computer has been used to control automatic loading equipment for loading workpieces, one at a time, onto the worktable, and automatic gauging sequences for automatically properly positioning the workpiece in the workpiece moving system after deposit by the loader.

Additionally, recently developed punching machines have also included automatic unloading devices for automatically unloading the workpiece after the program for punching the workpiece has been completed. Such devices are illustrated, for example, in U.S. Patent 4,080,855. Automatic gauging systems are illustrated, for example, in U.S. Patent 4,213,733, issued July 22, 1980, the teachings of which are herein incorporated by reference.

Computer controlled right angled shearing machines are also known to the art. See, for example, U.S. Patents 3,691,887, 3,874,260 and 3,887,332, issued respectively September 19, 1972, April 1, 1975 and April 15, 1975, the teachings of which are incorporated herein by reference. In such shearing machines, the device is also equipped with a central computer control and with a worktable having a workpiece positioning system, including a carriage and grippers moveable in the X and Y axes directions. Such machines may also be equipped with automatic discharge equipment, including means for separating finish sheared product from scrap.

Further, it has been suggested that since punching and shearing operations are foten used in connection with the same workpiece, either to shear a large workpiece to desired sizes to be fed to the punch, or to shear workpieces after punching to finished size, that transfer devices, such as conveyor systems, could automatically be used to move the workpiece between a punch and a shear, so that a workpiece discharged from the shear, or from a punch, could then be transported to a loading mechanism for loading onto the worktable of the next succeeding punch or shear.

Finally, shearing type tools, including notching tools and blanking tools, have in the past been used in place of punch and die tools on punch machines, such that the punch itself could act as a shear.

Each of the prior art vices, although complete in itself, has material handling deficiencies. Punch machines are not generally adequately sized to do large size workpiece shearing and produce a resultant large workpiece. Shears are not equipable with punching equipment operatable independently of the shear. Transfer lines for transferring workpieces between a punch and a shear encounter tolerance build-up problems in that the workpiece must be regauged for each machine and such transfer devices do not allow complete utilization of the optimum capabilities of the machines. For example, where shearing is done first and the part is then tranferred to a punch, the part, as transferred, must represent substantially the finished size of the workpiece. Since gauging and set-up on the punch is time consuming, it is not economical to run a large number of small parts on a punch when each part must be individually handled. For this reason, when a large number of small parts are to be handled on a punch, punching normally occurs first and the individual parts may thereafter be sheared from the larger punched workpiece. However, transfer of the workpiece from the punch to the shear precludes edge punching of each individual piece by notched punches, except on those edges which constitute the original outside edges of the workpiece. Additionally, the regauging problem remains.

An additional problem exists in the conomics of utilizing a plurality of individual machines. To provide a computer system for the control of each machine is uneconomical. Moreover, to provide an individual worktable and workpiece movement system for each machine is similarly uneconomical particularly, in connection with the shear which normally is in operation for a shorter period of time than the punch. It would therfore be an advance in the art to provide a combined punching and shearing system which overcomes the disadvantages enumerated herein.

Our invention provides an integrated combination punch and shear which utilizes present punch machine and shear machine technology by providing for an individual punch machine and an individual shear machine,

4

preferably right angle shear, which are commonly controlled and which are fed from a common workpiece movement system in association with a single worktable. By utilizing a shear and a punch in close spaced relation to one antoher and by incorporating a single workpiece movement system, many of the defficiencies of the prior art are eliminated with suprisingly beneficial results. For example, by utilizing a single workpiece movement system, the individual workpiece can be variously moved back and forth between the shear and the punch at extreme high speeds and with extreme accuracy. Secondly, misalignment problems which grow out of tolerance variances necessitated by regauging at individual machines are totally eliminated since the workpiece needs only to be gauged once when initially placed on the common worktable. Thirdly, edge punching or edge treatment of the individual finished workpiece is more easily facilitated in that each workpiece can have at least two unobstructed edges on which punch tools may be used.

In our preferred embodiment, we have additionally provided an automatic loading system, together with an automatic finished parts discharge system and a scrap separation system. By this means, a completely self-contained computer controlled sheet material machine tool has been provided which is capable of economically performing a vast number of various operations.

Although we have shown herein a standard type turret punch and a standard type right angle shear, it is understood that various additional devices may be utilized. For example, a tool changing punch system may be utilized in place of the turret punch, or in some instances, a single station punch may be used. Additionally, other features associated with state of the art punching equipment, such as laser and plasma arc cutting systems may be provided. Further, although a right angle shear is illustrated as being the preferred embodiment, in some situations a straight shear may be substituted.

It is therefore the principal object of this invention to provide a combined punching and shearing device.

It is another, and more particular, object of this invention to provide a computer controlled combined punch and shear utilizing a punching machine, a shearing machine, and a common workpiece movement system and common worktable.

It is another, and specific, object of this invention to provide an automatic punching and shearing system including a common worktable provided with an X and Y axis workpiece movement system, a punch machine having a throat opening adjacent the worktable at a height substantially the same as the worktable height, a right angle shear machine having a working opening at a height substantially the same as the worktable height, an automatic loading device for loading workpieces one at a time onto the worktable, an automatic gauging system for gauging the workpieces on the worktable and an automatic finished workpiece discharge system for discharging workpieces from the shear and with means for separating finished workpieces and scrap and for individually compiling the same, all controlled by a common central computer control.

Other objects, features and advantages of the invention will be readily apparent from the following description of a preferred emobdiment thereof, taken in conjunction with the accompanying drawings, although variations and modifications may be effected without departing from the spirit and scope of the novel concepts of the disclosure, and in which:

Figure 1 is a top plan view of a turret punch machine tool equipped with the automatically controlled workpiece load, workpiece gauge and workpiece unload devices of this invention;

Figure 2 is an end elevational view of the loading device taken along the lines II-II of Figure 1;

Figure 3 is a back elevational view, partially in section, of the loading device taken along the lines III-III of Figure 1;

Figure 4 is a perspective view of the assembly of Figure 1;

Figure 5 is a fragmentary sectional view of the top table section of the worktable and the workpiece receiving section of the stacking device;

Figure 6 is a diagrammatic flow chart of a hydraulic control system for the loader;

Figure 7 is a diagrammatic flow chart of a first operating phase of the loading device;

Figure 8 is a view similar to Figure 7 illustrating a second operating phase of the loading device and a first gauging phase;

Figure 9 is a view similar to Figure 8 illustrating a third operating phase of the loading device and a second gauging phase;

Figure 10 is a view similar to Figures 7 through 9 illustrating an unloading phase;

Figure 11 is a top plan view of a combined system according to this invention including automatic loading and discharge devices, a worktable with a common workpiece movement device, a shear machine and a punching machine;

Figure 12 is a plan view of a workpiece with a finished workpiece sheared therefrom; and

Figure 13 is a front elevational view of the device of Figure 11.

7

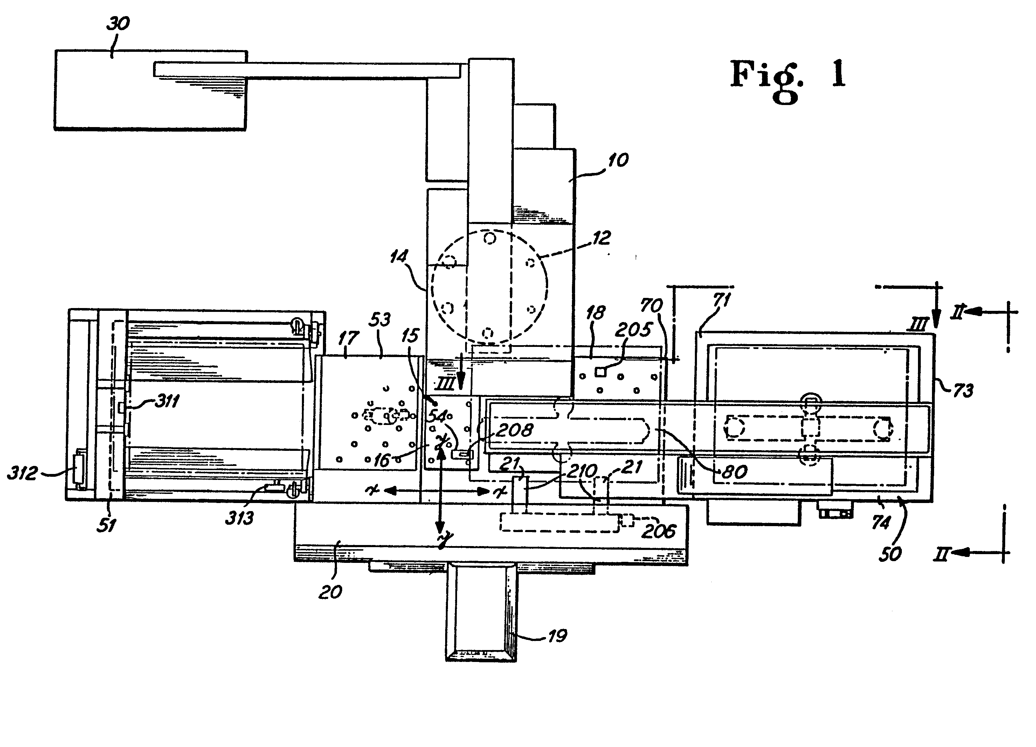

The following description of Figures 1 through 10 is descriptive of a state of the art automatic loading and unloading punch press of the type utilizable in practicing this invention as more specifically shown in Figures 11, 12 and 13.  The description of Figures 1 through 10 is identical with the description in United States Patent application Serial No. 052,241, filed June 26, 1979 as a continuation of Serial No. 815,821, filed July 15, 1977, applicant Stephen Chester Clark, entitled "Automatic Load Unload Turret Punch", which application is copending with this application.  No portion of the description of Figures 1 through 10 is claimed to be the invention of these applicants but is included for the purpose of providing a complete description of commercially available automatic loading devices, workpiece movement devices, automatic gauging systems and punch presses, together with controls therefore, all of which are of a type utilizable in the present invention.

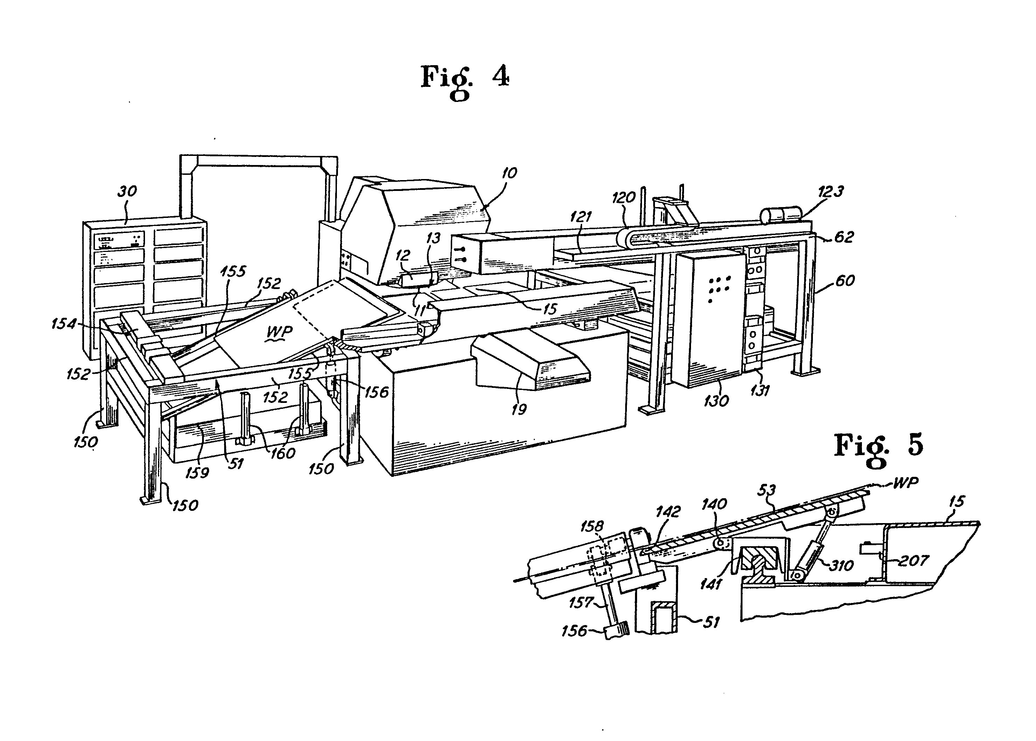

As best illustrated in Figures 1 and 4, this invention is adapted  for use in association with machine tools and more particularly with turret punches 10.  Such turret punches comprise a punching station and include lower 11 and upper 12 spaced apart turrets containing respectively dies and punches with the turrets being rotatable to present any given set of punch and die at a work station 13.  Positioned in front of the turret assembly housing 14 is an elevated worktable 15 which includes a stationary central portion 16 and in and out movable side portions 17 and 18.  Movement of the side portions 17 and 18 is controlled by a motorized lead screw 19.  A horizontally movable gripping carriage 20 is carried by the movable worktable portions 17 and 18 for movement therewith.  The carriage 20 carries horizontally movable workpiece clamping means in the form of gripping members 21.

0102646

As is well known in the art, movement of the workpiece gripping members 21, the moving worktable portions 17 and 18 and the turrets 11 and 12 is controlled by a control means 30 which may be an NC, a punch tape reader, or a computer.

The particular control 30 to be utilized in association with this invention forms no part of the invention and standard available controllers may be utilized. For example, an HC10000A control, commercially available from Houdaille Electronics Division of Houdaille Industries, Inc. has proven to be usable in association with my invention requiring modification only to accept additional inhibit or command inputs and outputs. It is apparent that any person skilled in the art of designing machine tool controls will be able to provide control hardware and software to effectuate control of the devices as hereinafter described and therefore no attempt will be made to describe the construction of the control.

In the practice of this invention, an automatic workpiece loading device or magazine 50 is positioned adjacent one side of the worktable 15 and a workpiece stacking device or magazine 51 is positioned adjacent the other side of the worktable 15. The side of the table associated with the stacking device 51 is equipped with a tipping edge section 53 of the type described in the aforesaid application U.S. Patent 4,080,855.

Additionally, the machine tool is provided with an automatic side gauge mechanism 54 of the type described in aforesaid Serial No. 720,803, the side gauge 54 including a switch 208. Further, the gripping members 21 are provided with pressure sensing switches 210 and the carriage 20 is provided with an X axis gripping carriage position sensing switch 206 while the moving table portion 18 is provided with a Y axis position sensing switch 205 which may, for example, be actuated by a cam land on a base underlying the moving table portion. A sensing switch 207 is positioned adjacent the tip table section 53 and is effective to sense when the tip table is in a tipped condition. The addition of the tip table 53, the side gauge 54 and the sensing switches 205,206,207, 208 and 210 and the loading device, stacking device and control changes represent the only modifications from the state of the art turret punch machine tools necessary for the practice of this invention.

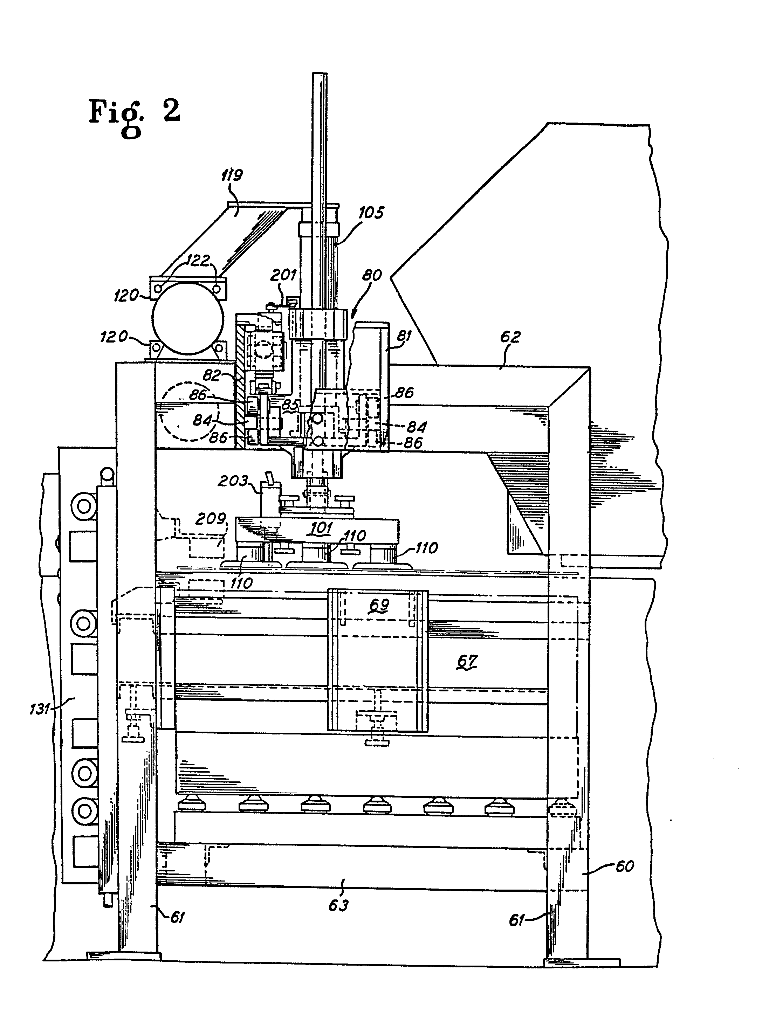

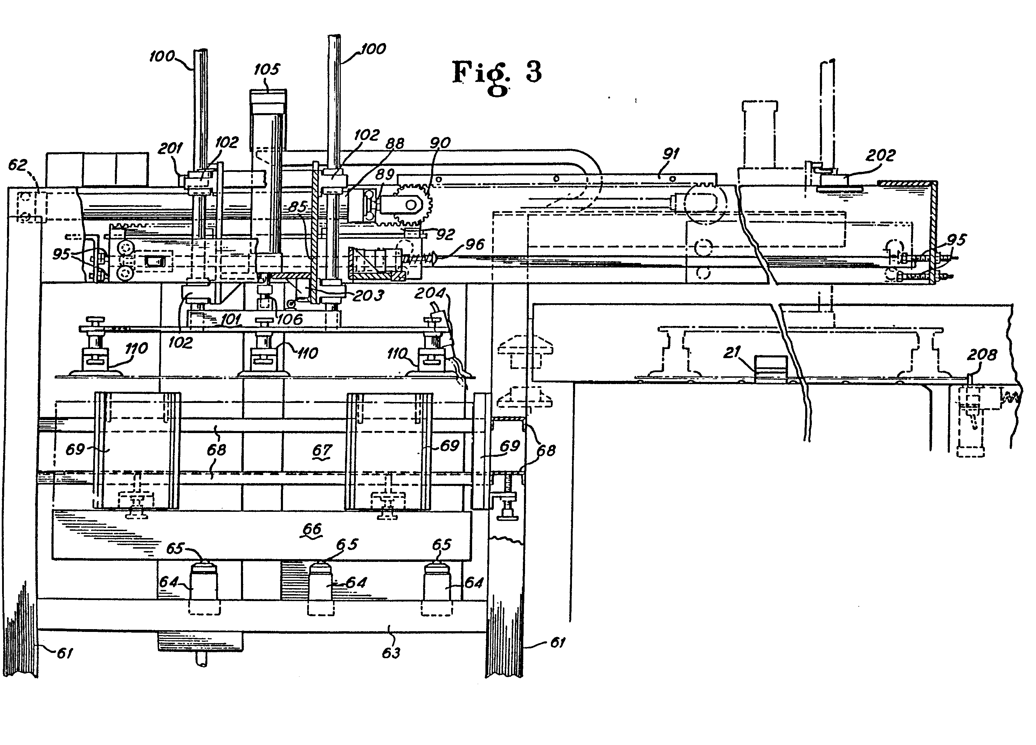

As best shown in Figures 2 and 3, the workpiece loading device comprises a frame 60 including spaced uprights 61 capped by top rails 62 and supporting bottom rails 63. The bottom rails 63 are equipped with bed members 64 having anti-friction means 65 thereon for receipt of a pallet 66 containing a stack 67 of workpiece sheets. If desired, a pad may be interposed between the anti-friction means 65 and the pallet 66, which will raise the pallet and thus adjust the volume of the loader magazine. Two sides of the frame enclosed area carry spaced parallel rails 68 on which are adjustably positioned sheet fanning magnets 69.

In order to provide adequate access to the corner 70 of the machine tool, the corner 71 of the frame has the side upright 60 extending only partway up. Thus the top rails 62 extend fully only on sides 73 and 74. Extending crosswise of the loader frame and cantilevering out over the table of the machine tool is a carriage track 80 including parallel walls 81 and 82 welded to the top rail 62 on the side 63 which, in turn, internally support inwardly projecting track pieces 84 on which a carriage 85 is mounted by means of rollers 86 such that the carriage is movable along the length of the carriage track from a position over the stack 67 to a position overlying approximately half the machine tool workpiece support table.

The carriage 85 is power moved by a double acting cylinder 88 having a power arm 89 terminating in a rotatable pinion 90. A fixed rack 91 carried by wall 82 overlies the pinion 90 and extends partway along the length of the carriage track 80. A moving rack 92 underlies the pinion 90 and is affixed to the carriage 85. Thus, actuation of the cylinder 88 to extend the power arm 89 will cause movement of the carriage in the direction of movement of the power arm 89 with carriage 85 movement being twice power arm movement. Adjustable stops 95 at both ends of the tracks 84 cooperate with shock absorbers 96 affixed to the carriage 85 to limit movement of the carriage at the ends of the carriage track 80.

The carriage 85 has linear motion bushings 102 attached thereto through which parallel vertically disposed bushing rods 100 project. Rods 100 are affixed to a head member 101 positioned below the carriage and movable therewith. A double acting cylinder 105 carried by the carriage 85 has a power arm 106 attached to the head 101.

A plurality of pneumatic cups 110 are attached to and depend from the head 101 overlying the area of the stack 67 when the carriage is in the position illustrated in Figures 2 and 3. It will thus be apparent that the carriage 85 and the head member 101 comprise ejector means associated with the loader magazine for horizontally feeding workpieces one at a time in a feed direction from the loader magazine to the turret punch to be moved into operative association with the clamping means 21.

Hydraulic and electric power is supplied to the carriage 85 and head 101 through a channel 119 affixed to the cylinder 105 and movable therewith. The channel 119 is attached to a hairpin shaped self-laydown cat track 120 supported on a shelf 121 paralellelling the carriage track 80. The cat track has electric and hydraulic conduits 122 extending therethrough, some of which are connected to a vacuum pump assembly 123 mounted atop a frame. A control panel 130 and a valve back panel 131, best illustrated in Figure 4, are also mounted to the frame.

The unload device includes tip table section 53 hinged at 140 to the moving table portion support 141. A double acting valved cylinder 310 connected respectively to the support 141 and to the table portion 53 operates to selectively pivot the tip table 53 to an outside edge 142 down position such that a workpiece WP resting on the tip table 53 will be discharged to stacker 51. The stacker 51 is a four posted 150 frame having four cap rails 152 and a vertical height sufficient to position. and remove a pallet from thereunder, and which pallet may be of any selected size to adjust the volume of the unloader magazine for the desired dimensions of stack of punched workpiece sheets to be received thereon after release by the clamping means 21. Attached to the cap rails is a back wall and stop member 154 which is movable along the side cap rails towards and away from the machine tool worktable. Inclined angle rails 155 are affixed to the frame interior of the cap rails and at least one inclined rail 155 is adjustable towards and away from the other inclined rail. The inclined rails are preferably L-shaped rails and are mounted for longitudinal rotation with rotation being controlled by double acting cylinders 156 supported on the frame and having power arms 157 attached through a bracket 158 to the rotatable rails 159. The rails are initially spaced apart a distance equal to the width of the workpiece WP with slight clearance with one leg of the L shape turned

12

inwardly towards the opposed rail forming a receipt land for the workpiece WP being discharged from the tip table 53.

Unload is accomplished by tipping the tip table 53 to slide the workpiece WP onto the inclined rails 155 which, due to the incline, will allow the workpiece to continue its outward and downward movement away from the worktable 15 until it contacts the stop 154 which has been adjusted to a position dependent upon the length of the sheets being run. Thereafter, the rails 155 are rotated inwardly to allow the sheet to drop to the pallet. The pallet may be equipped with vertical guides 160 to assist in guiding the sheet to the area of stacking on the pallet. Air resistance to the drop of the sheet aids in controlling the fall rate.

Operation of the loading device, the gauging and the unloading device and stacking member are all influenced by switches and controlled by valves under the direction of the control 30. The loading device is provided with a switch 201 for sensing positioning of the carriage over the stack 67 at one end of the carriage track 80 while a switch 202 senses positioning of the carriage over the machine tool support table at the other end of the carriage track 80. A switch 203 carried by the carriage 85 senses a raised positioning of the head 101 while a switch 204 carried by the head 101 senses engagement of the cups 110 with a workpiece.

Switch 205 senses positioning of the workpiece clamp carriage 20 at a position on the Y axis withdrawn away from the turrets 11 and 12 while switch 206 senses positioning of the clamps 21 at a position on the X axis withdrawn away from the tip table and adjacent the loader. Thus the Y axis positioning of the work clamps can be determined from switch 205 while the X axis positioning of the clamps can be determined from switch 206.

Switch 207, best illustrated in Figure 5, carried by the worktable 15, senses whether the tip table 53 is in an untipped condition. Switch 208 is activated when the side gauge 54 is contacted by a workpiece being moved by the clamps 21. Switch 209, illustrated in Figure 2, carried by the loading device frame, comprises a transmitter-receiver double sheet sensing device indicating if the head 101 is transporting more than one sheet. Switches 210 are pressure sensitive switches carried by the workpiece gripping members 21 at a back of a throat opening of the members and detect the presence of a workpiece having an edge fully bottomed in the gripping members.

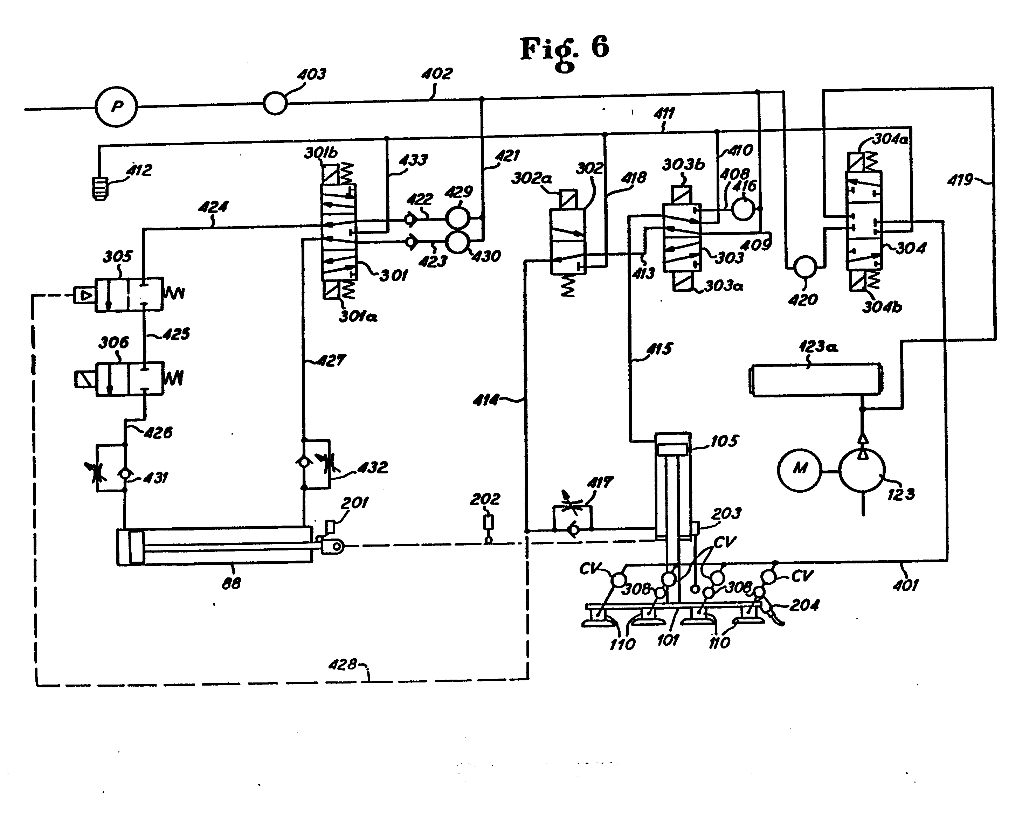

As best illustrated in Figure 6, movement of the loading device carriage 85 and head 101 as well as activation of the cups 110 is controlled by solenoid activated valves 301, 302, 303 and 304 mounted on valve panel 131. Blocking valves 305 and 306 cooperate with valves 301 and 302 to prevent loader carriage movement at inappropriate times as is more fully hereinafter described.

Valves 308, in pneumatic line 401 to the cups 110 are individually actuatable to block or open line 401 to the individual cups allowing selective usage of the cups depending upon the size of the workpiece being loaded. Valve 309 carried by the carriage 20 activates the workpiece clamping members 21. Valve operated cylinder 310, illustrated in Figure 5, operates the tip table while valves 311, 312 and 313 on the stacker 51 cooperate to control rotation of the rails 155.

14

OPERATION OF THE LOADING DEVICE PNEUMATIC CIRCUIT

As best illustrated in Figure 6, hydraulic pressure is provided to the loading device 50 through line 402 from a factory air pressure source with pressure controlled by a regulator 403. Raising and lowering of head 101 through cylinder 105 is controlled by valves 302, and 303. Air pressure from line 402 is supplied by lines 408 and 409 to two position spool valve 303 while exhaust to atmosphere is provided by line 410 from spool valve 303 to line 411 open to the atmosphere through muffler 412. In the position of spool valve 303 illustrated, line 409 is communicated to line 413 which in turn communicates to two position spool valve 302 which opens line 413 to line 414 in communication with the bottom of cylinder 105. Thus with spool valves 302 and 303 in the position illustrated, head 101 will be raised and the top half of cylinder 105 will be exhausted through line 415 through spool valve 303 to line 410. Upon activation of solenoid 303a and deactivation of solenoid 303b, line 415 will be communicated to line 408 which, through pressure regulator 416, is in communication with pressure line 412 while exhaust line 410 will be communicated to line 413. In this position of valve 303, pressure will be supplied to the top of cylinder 105 while the bottom of cylinder 105 will be exhausted through line 414 through variable regulator 417 and therefore head 101 will descend.

By maintaining 303 in the position illustrated in Figure 6 but activating solenoid 302a to shift the spool valve 302, the bottom of cylinder 105 can be vented to atmosphere through regulator 417, line 414 and line 418 to line 411 while pressure is not being provided to the top of cylinder 105. In this mode, head 101 descends by gravity against the resistance of regulator 417. This mode is used when head 101 is positioned over the worktable with a workpiece carried by cups 110 for deposit of the workpiece on the worktable. This allows gentle deposit of the workpiece on the table without forcing the workpiece to depress the spring loaded anti-friction rollers on the table to a point which would interfere with the ability of workpiece gripping members 210 to engage the workpiece.

Vacuum pump 123 operates through accumulator 123a to provide vacuum to line 419 to three position spool valve 304 which is in communication with exhaust line 411 and pneumatic line 401 as well as pressure line 402 through regulator 420. When solenoid 304a is operated to move spool valve 304 downward from the position illustrated, vacuum line 419 will be in communication with pneumatic line 401 providing suction to the cups 110. When solenoid 304b is operated to move spool valve 304 vertically up from the position illustrated in Figure 6, pressure line 402 will be communicated to pneumatic line 401 to blow off a workpiece carried by cups 110.

Movement of the carriage 85 is controlled by a cylinder 88 which in turn is controlled by three position spring centered spool valve 301. When it is desired to advance the carriage, solenoid 301a is actuated communicating pressure line 402 through line 421 pressure regulator 429 and line 422 to line 424 which, in turn, connects through pilot valves 305 and 306 and lines 425 and 426 and variable regulator 431 to provide pressure to the left hand side of cylinder 88 in the view shown in Figure 6 to advance carriage 85 towards the worktable. At the same time, line 427 in communication with the right hand side of cylinder 88 through variable resistance 432 is communicated to line 433 to exhaust line 411. Pilot valve 305 is operated as a spring biased closed valve openable only when pressure exists in line 414 indicating the head 101 is in a raised position. This prevents movement of the carriage when such movement could damage head 101. Pilot valve 306 is a normally closed solenoid activated valve which is advanced to an open position by the controller 30. During normal operating conditions pilot 306 is maintained in an open condition during all normal operating conditions, however, it will be unpowered and therefore spring closed anytime an emergency stop or all hold signal is given to the controller 30 or whenever electric power is lost within the system.

When spool 301 is in the centered position illustrated in Figure 6 and pilots 305 and 306 are open, cylinder 88 will be maintained in a hold condition so long as regulators 429 and 430 are balanced to compensate for the difference in surface area on opposed sides of the piston cylinder 88.

When it is desired to retract head 101 to a position over the stack 67, solenoid 301b is activated to communicate line 427 to line 423 through regulator 430 to line 421 to pressure line 402. At the same time, line 424 is communicated to line 433 to exhaust line 411 thereby exhausting the left hand side of cylinder 88.

STEP BY STEP OPERATION OF INVENTION

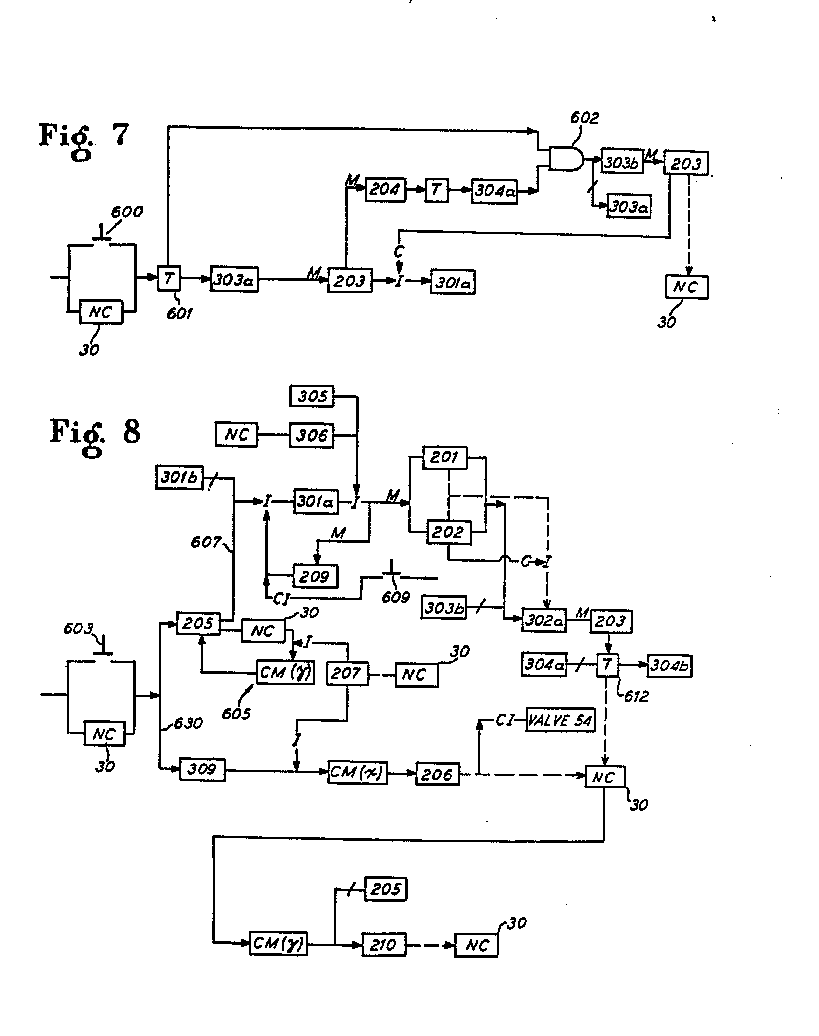

Figures 7 through 10 diagrammatically illustrate the autmoatic operation of the loading device workpiece gauging and the unloading device of this invention under control of controller 30. Figure 7 illustrates the descent of head 101, the attachment of a workpiece from stack 67, and the ascent of head 101 of loading device 50. Figure 8 continues operation of the loading device from Figure 7 and illustrates advance of carriage 85 to position head 101 over the machine tool worktable positioning of the workpiece gripping members to a machine tool load position, descent of the head 101 to deposit the workpiece on the worktable and the gauging of the workpiece in the Y axis.  Figure 9 illustrates a further sequencing of the loading device from Figure 8 to withdraw head 101 from the machine tool worktable and from contact with the workpiece, to withdraw carriage 85 to a position over stack 67 and to gauge the workpiece in the X axis direction.

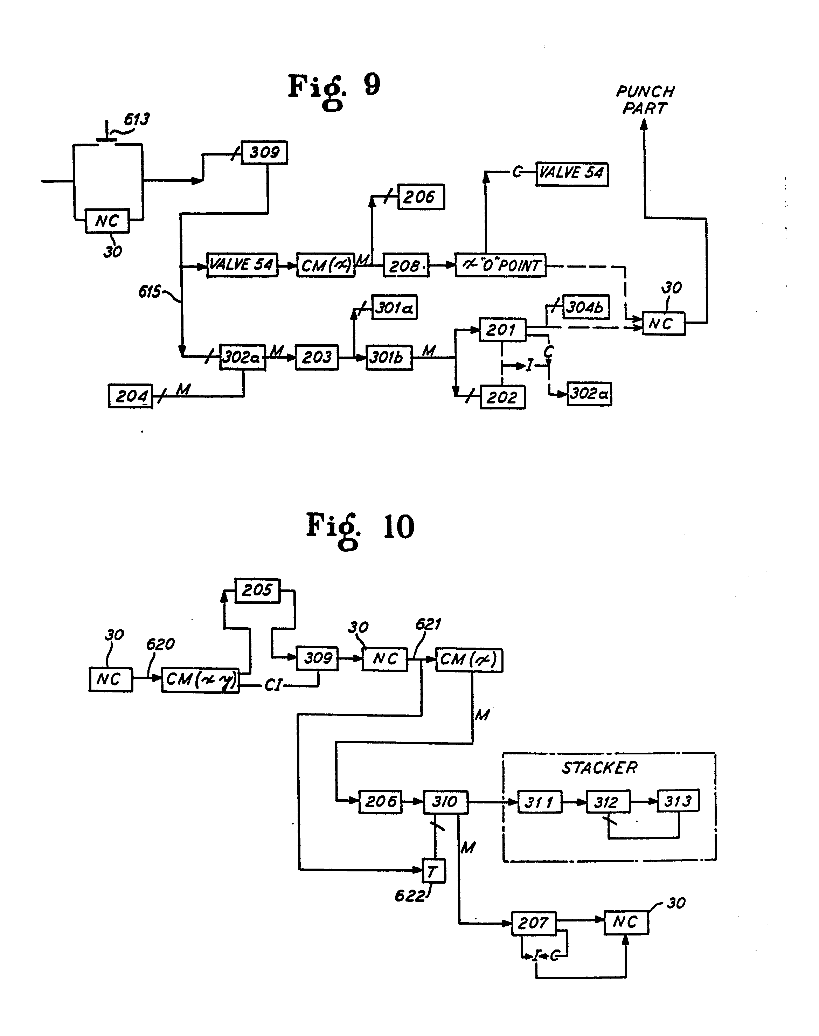

Figure 10 illustrates the unloading sequence.

In Figures 7 through 10, NC indicates the controller 30, T indicates a time delay clock, M indicates that the effect on the next illustrated device is caused by movement of a device rather than by a signal input. I indicates an inhibit signal preventing actuation of a device, C indicates a cancel signal cancelling an inhibit signal.  A (/) mark through a line indicates a signal to return a device to a previous state of activation, (CM) indicates gripper carriage movement in either or both the X and Y directions as indicated.

Operation of the loading device, the gauging devices and the unloading device sequencing takes place in at least four distinct steps. The first step is a loading device ready step during which the loading device head descends over the stack 67, engages the top sheet of the stack and raises it to a carriage transport position.  This step is independent of any operation being carried out in connection with the machine tool and can be programmed to run simultaneously with a piece program of the machine tool.

A second step involves transport of the loaded workpiece to a position above the machine tool worktable, movement of the workpiece gripping members to a load position, descent of the head to deposit the workpiece on the worktable, partial disengagement of the workpiece from the head, and workpiece gauging in the Y axis. A third step clamps the workpiece in the workpiece gripping members, withdraws the head to a transport position above the table, withdraws the loading device carriage to a position above the stack 67, moves the workpiece in the X axis direction and guages it and terminates the load sequence. The fourth step moves the completed workpiece to the unload station of the worktable, disengages the workpiece from the workpiece gripping members, withdraws the workpiece gripping carriage from the tip table section of the worktable, removes the workpiece from the machine tool worktable and deposits it in the stacking device and cycles the stacking device to stack the workpiece in a finished product stack.

The sequence of operations involved in the first step is illustrated in Figure 7 where the cycle is activated by a signal either generated in the manual mode from a push button 600, or in the automatic mode from the controller 30. The signal is fed to a timing clock 601 and directly from that to valve solenoid 303a. Actuation of valve solenoid 303a places pressure line 408 in communication with line 415 while venting line 413 to line 410. This causes the loader head 101 to descend into engagement with stack 67. During descent, switch 203 opens providing an inhibit signal preventing actuation of solenoid 301a which prevents movement of carriage cylinder 88 to move the carriage 85 away from the overstack position. Descent of the head brings switch 204 into contact with the top sheet of the stack 67 which after a time delay to assure proper seating of the cups 110 on the top sheet of the stack sends a signal to activate solenoid 304a which communicates vacuum line 419 to line 401 supplying vacuum to the cups 110. Activation of solenoid 304a provides a signal to an and gate 602 which also receives a signal from timer 601 and in the presence of both signals provides a signal to activate solenoid 303b while at the same time deactivating solenoid 303a. This communicates pressure line 409 to line 413 and through valve 302 to line 414 while at the same time venting line 415 to line 410. In this valve position, head 101 is lifted from engagement with the stack 67 to a transport position above stack 67 thereby closing switch 203. Closure of switch 203 cancels the inhibit on valve solenoid 301a and provides a signal to the controller 30 indicating that the loader is now in the loading device ready condition.

Figure 8 illustrates the second step which is initiated either by a signal from controller 30, or, in the manual mode, from push button 603. Because operation of step 2 will bring the loading device into the area of the machine tool, the signal from controller 30 or from button 603 is prevented from activating the loading device unless certain machine tool table conditions exist. First, as indicated, at 605, the workpiece gripping carriage must be properly positioned in the Y axis direction with switch 205 closed. Movement of the Y direction is under the influence of the controller 30 and was previously accomplished in connection with the unloading cycle prior to actuation of tip table 17. Actuation of tip table 17 had opened switch 207 under control of the controller 30 which had placed an inhibit on further movement of the carriage in either the X or Y axis. If, upon receipt of signal from the button 603 or controller 30, switch 205 does not indicate the proper positioning of the workpiece carriage in the Y axis direction, the controller 30 will cause movement to the proper position unless inhibited by switch 207. Upon closure of switch 205 indicating proper positioning of the workpiece gripping carriage in the Y axis, the signal 607 will cancel activation of solenoid 301b, if that solenoid remains actuated from a previous cycling of the loader. At the same time signal 607 will actuate solenoid 301a which will cause an initial movement of the cylinder 88 by communicating pressure line 422 with line 424 while venting 427 to line 433. Pressure in line 424 will provide pressure in line 426 unless blocked by pilot valves 305 or 306. Thus, as indicated, valves 305 or 306 can inhibit any movement of cylinder 88 even though solenoid 301a is activated. Valve 305 senses head lifting pressure in the bottom of cylinder 105, which, if present indicates that head 101 is raised. Sensing is through pilot line 428. If the head 101 is raised, valve 305 communicates line 424 to line 425. Valve 306 is solenoid operated by controller 30 and will communicate 425 to line 426 unless the controller is in an emergency stop or all hold condition or electric power has failed to the system. In the absence of an inhibit from valves 305 or 306, movement of cylinder 88 will begin to move carriage 85 towards the machine tool. This movement will pass the workpiece suspended from the cups 110 between the double sheet transmitter receiver sensor 209. If a double sheet is detected, an inhibit signal will be sent to terminate the signal to 301a and initiate an all hold condition. The inhibit can be cancelled by manual push button 609 upon correction of the double sheet condition. In the absence of an inhibit from switch 209, movement of the carriage 85 deactivates switch 102 producing an in phase condition between switches 201 and 202 during movement of the carriage 85. This in phase condition produces an inhibit on further actuation of solenoid 302a preventing inappropriate lowering of head 101. Upon completion of travel of carriage 85, switch 202 is activated eliminating the in phase condition between switches 201 and 202 and providing a cancel to the inhibit of valve 302a. Activation of switches 201 and 202 to the proper out-of-phase condition produces a signal to cancel activation of solenoid 303b and to activate solenoid 302a. Activation of solenoid 302a vents line 414 to line 418. At the same time line 415 has previously been vented to line 410 so there is now no pressure being provided to cylinder 105. Therefore head 101 will drop to the machine tool work support table under gravity while forcing any air out of the bottom half of pressure cylinder 105 through restricted orifice 417. This gravity drop feature is desired in that it insures that no force, other than the weight of the head 101, is applied pushing the workpiece against the machine tool workpiece support table. If excess pressure were applied, the workpiece would bottom the anti-friction balls on the machine tool workpiece support table and bring the workpiece to a position below which it would be grabable by the workpiece gripping members. Descent of the head 101 opens switch 203 which provides a signal to timer 612. This timer provides a delay sufficient to allow the workpiece to be deposited on the machine tool workpiece support table and then sends a signal to cancel activation of solenoid 304a terminating vacuum supply to the cups 101. Simultaneously a signal is sent activating solenoid 304b communicating pressure line 402 through regulator 420 to line 401. This blows air through cups 110 to break suction contact between the cups and the deposited workpiece. While the carriage 85 has been moved from the loader stack area to a position over the workpiece support table, the signal from manual button 603 or the NC 30 which activated that movement has simultaneously provided a signal to valve 309 causing the workpiece gripping members to open and causing workpiece gripping carriage 20 movement in the X axis direction, unless inhibited by 207, to bring the workpiece gripping members to a load position in the X axis direction, at which time switch 206 is closed to provide a signal to the controller 30 indicating that the workpiece gripping members 21 are in the proper position in the X axis direction for receipt of the workpiece being loaded. Proper positioning in the Y axis direction had been previously assured by passage of the signal to initiate movement of the loading device from the ready position through switch 205. The same signal advising the controller 30 that the workpiece gripping members are in the proper position in the X axis direction can be utilized to clear any inhibit on actuation of the valve for side gauge sensor 54.

Upon receipt of signals from timer 612 and switch 206, controller 30 initiates movement of the workpiece gripping carriage in the Y axis direction. Since the carriage had previously been moved to a designated 0 point at the workpiece gripping carriage load position, and since that point is known with the controller, movement in the Y direction is restricted to a pre-set distance, for example 1.5 inches. During this movement, the open gripping members 21 will move into position around the deposited workpiece until the edge of the workpiece contacts sensors 210 located at the back of the workpiece gripping member throats. During this movement, the workpiece, resting on the machine took worktable will still have the weight of head 101 resting thereon which provides a sufficient resistance to movement of the workpiece on the worktable to prevent the engagement of the workpiece by the gripping members from imparting sufficient movement to the workpiece to cause it to jump away from the workpiece gripping members. At the same time, due to the flexibility of cups 110, movement of the workpiece by contact with the moving workpiece gripping members is allowed so that the workpiece can pivot with respect to the machine tool worktable and to head 101. This pivoting allows the straight edge of the workpiece to engage each of the workpiece gripping members 21 even though the loader may have deposited the workpiece on the machine tool worktable in a canted condition out of parallelism with the workpiece gripping members 21. It has been empirically determined that a movement in the Y axis direction of 1.5 inches is sufficient to insure activation of sensors 210 in each of the workpiece clamping members 21, when the clamping members 21 are of a normal size and when the workpiece has been moved and deposited on the worktable .in the generally designated area and generally properly aligned into operative association with the clamping means members 21. However, since alignment of the workpiece on the worktable is, according to this invention, not a critical function of the loader, and since alignment can vary depending upon the positioning of the stack in the loading device and oscillations of the workpiece allowed by the flexibility of the cups 110, other embodiments may require a greater movement in the Y axis. A desired feature of this invention is the fact that proper alignment of the workpiece in the Y axis direction is accomplished by movement of the gripping members against the deposited workpiece on the machine tool worktable and sensing of proper contact between the workpiece and the gripping members 21 by switches 210 which may be pressure switches. Thus, I have eliminated any major criticality relating to the deposit of the workpiece on the workpiece support table while at the same time avoiding the necessity of any complex sideways movements of the loading mechanism to bring the workpiece into the clamping members. Since the distance of movement of the clamping members 21 from the base line to the point of full engagement with the workpiece is known, upon closure of the switches 210 and completion of the movement of the workpiece gripping members in the Y axis direction, the exact positioning of the forward edge of the workpiece with respect to the machine tool center line is known by the controller, since the controller knows that the then positioning of the workpiece grippers in the Y axis direction is 1.5 inches inward from the Y axis zero point. Closure of switches 210 sends a signal to controller 30 indicating that the workpiece has been properly gauged, or positioned in the Y axis direction thereby terminating step 2.

Figure 9 illustrates step three which once again is initiated by a signal from controller 30 or, in the manual mode from push button 613. That signal cancels activation of solenoid 309 causing the workpiece gripping members 21 to close into engagement with the properly Y axis positioned workpiece. Upon closure of the workpiece gripping members 21, the signal may be used to activate the valve on side gauge sensor 54 to project the sensor above the surface of the workpiece support table. The signal also deactivates solenoid 302a which, because valve 302 is a spring biased valve, communicates pressure line 413 with line 414. This raises cylinder 105 to lift head 101 to a transport position above the machine took worktable. Movement of the head causes switch 204 to rise out of contact with the workpiece thereby indicating that cups 110 are free of the workpiece. Further movement closes switch 203 which produces a signal cancelling activation of solenoid 301a and activating solenoid 301b. Activation of solenoid 301b communicates pressure line 423 with line 427 and vents line 431 through lines 426, 425 and 424 to line 433. This causes retraction of cylinder 88 moving carriage 85 from the position over the machine tool worktable to the position over the loading device stack 67. During this movement switch 202 is initially opened causing an in phase condition between 202 and 201 producing an inhibit on activation of solenoid 302a and, if desired, 303a preventing downward movement of head 101. Upon completion of movement of cylinder 88, switch 201 is contacted eliminating the in phase condition and cancelling the inhibit. Closure of switch 201 provides a signal which may be used to cancel the signal to 304b turning off the blow off air and sending a signal informing the controller that the loading device is clear of the machine tool. The valve for side gauge sensor 54 has been activated to raise the side gauge sensor above the workpiece support table 15. The workpiece gripping member carriage 20 is now caused to move in the X axis direction by signal 615. Since the gripping members 21 are closed, the workpiece will be carried in the X axis direction until its leading edge abuts side gauge 54. This abutment of side gauge 54 will cause movement of the side gauge projection, which movement closes switch 208 at a point precisely positioned with respect to the machine tool center line. This precise positioning of the point at which switch 208 is closed during lateral movement of the projecting portion of side gauge 54 allows switch 208 to send a signal to the controller setting the X axis at zero point at the position of the workpiece gripping carriage 20 at that instant. This precisely gauges or positions the workpiece in the X axis irrespective of what point along the X axis length of the workpiece it was gripped by the workpiece gripping members 21. Since the position of switch 208 is known with respect to the machine tool center line, and since the position of the workpiece gripping members at the point of closure of switch 208 is known within the controller, the workpiece has now been precisely gauged in both the X and Y directions. This gauging can be used to send a signal to cancel actuation of the valve for the side gauge projection 54 withdrawing the side gauge to a position below the workpiece support table and allowing free movement of the workpiece over the support table. At the same time a signal is sent to the controller 30 for comparison with the signal from 201. The presence of both signals indicates that step 3 has been completed and the controller can be cycled to its next command initiating the piece program on the workpiece.

Upon completion of step 3, the loading device is once again repositioned over the loader stack 67 and all valves and switches are in the position illustrated in Figure 6 except that solenoid 301b remains activated maintaining the cylinder 88 in the over-stack position. Because of the balanced pressure condition of the spring center point of valve 301, solenoid 301b may be deactivated if desired as a final step of cycle 3 from a signal from switch 201. However deactivation is not required since signal 607 of Figure 8 accomplishes that result.

Upon completion of the piece program, the unloading cycle, step 4, is triggered by the controller 30 as being the next command within the controller upon completion of production run sequence. This command causes a set of signals 620, illustrated in Figure 10, to be sent to the controls for movement of the workpiece gripping carriage to move the workpiece gripping carriage in both the X and Y axes to a position where the workpiece is positioned over the tip table portion 17. Arrival at this position is sensed by Y position sense switch 205. At the same time, the command which caused the carriage to be moved to the unload position clears any inhibit upon actuation of valve 309 which inhibit has been present throughout the piece program in order to maintain the workpiece in the workpiece gripping members.

Actuation of switch 205 provides a signal to activate valve 309 to open the workpiece gripping members 21. Control 30 is then signaled that the gripping members are open and controller 30 initiates a signal 621 which causes movement of the workpiece gripping carriage in the X axis direction away from the tip table 17 and back to the load position thereby closing switch 206. Closure of switch 206 activates the valve operated tip table cylinder 310 to tip the table segment 17. It can therefore be seen that in order to tip table segment 17 both switches 205 and 206 must be activated to insure that the workpiece is clear of any overhanging portions of the machine tool. The same signal 621 which causes movement of the workpiece gripping carriage in the X axis provides an input to time delay clock 622 which, after a delay, sends a signal to cancel activation of valve operated tip table cylinder 310 thus closing the tip table segment 17.

Activation of valve operated tip table cylinder 310 had opened switch 207 thereby providing an inhibit to the controller 30 preventing any further commands from being issued by the controller 30 during operation of the tip table. Closure of the tip table caused by the signal from time delay clock 622 closes switch 207 cancelling the inhibit on controller 30 and at the same time sending a signal to the controller 30 which may be used to instruct the controller to advance to its next command.

Activation of the tip table 17 causes the workpiece to slide thereoff, as indicated in Figure 5. Movement of the workpiece is onto the inturned legs of the L-shaped rotatable rails 155. Further movement of the workpiece on the inclined rails 155 brins the leading edge of the workpiece into contact with end wall 154. End wall 154 is equipped with pilot valve 311 which is closed by engagement with the leading edge of the workpiece. Closure of valve 311 operates master valve 312 to open valve 313. Valve 313 activates cylinders 156 to cause rotation of rails 155. Rotation of the rails drops the completed workpiece onto the completed workpiece stack 159 positioned under the unload stacking device 51.

Dropping of the workpiece from the rails 155 disengages contact with valve 311 which terminates signal to valve 312 which in turn terminates the signal to the valve 312 which in turn terminates the signal to the valves 313 causing cylinders 156 to return to the unrotated position of the rails 155.

It can be seen that the unload stacking device 51 is totally independent of the controller 30 and further, is completely hydraulically or pneumatically operated. These are felt to be desirable advantages in that they reduce the complexity of the control function while at the same time avoiding dual power supply to unload stacking device 51.

It will further be noted that upon the completion of step 4 the workpiece gripping carriage has been moved to the load position on the worktable with switches 205 and 206 closed. It will be appreciated that this effects the actual sequence of step 2 as shown in Figure 8 in that switch 205 is closed as well as switch 206. Thus the initial signal in step 2 is in normal circumstances, the signal 607 and that portion of signal 630 which activates valve 309 to open the clamps and provide a signal to control 30, and if desired to clear the inhibit to operation of the valve of side gauge sensor 54. Further, it can be seen that the activation of tip table valve 310 in step 4 is the source of the inhibit from switch 207 indicated in Figure 8. That portion of Figure 8 included within the dot-dash lines constitutes a duplication circuit to portions of Figure 10 allowing step 2 to be operated without prior operation of step 4.

It will be further appreciated that although Figures 7 through 10 illustrate, diagrammatically, certain sequences of happenings within the operation of the load, workpiece positioning, and unload cycles of this invention, that other sequences of steps can be utilized, and further, that other and separate signals may be utilized. For example, separate operating circuits within the controller 30 can be provided whenever a point has been reached that the next successive point is under bar by an inhibit. These operating circuits can be used to automatically check and clear the inhibit condition. Additionally, other inhibits may be provided, if desired. For example, an inhibit to activation of the machine tool turret and punch ram may be provided during any of cycles 2, 3 and 4. Additionally, other sensors may be provided, for example, a sensor indicating exhaustion of stack 67 or overfill of the unload stacking device 51.

It is best illustrated in Figure 11 this invention includes a loader device 800 which may be substantially the same as the device 50 previously described. The invention also includes a punch 801 which may be substantially the same as the punch 10, includes a worktable 802, a workpiece positioning system 803, including grippers 804 and carriage 805. Further, the invention includes a right angle shear 806 and an unloading or discharge device 807. All of these devices 800 through 807 are commonly controlled from a central automatic controller or computer 810.

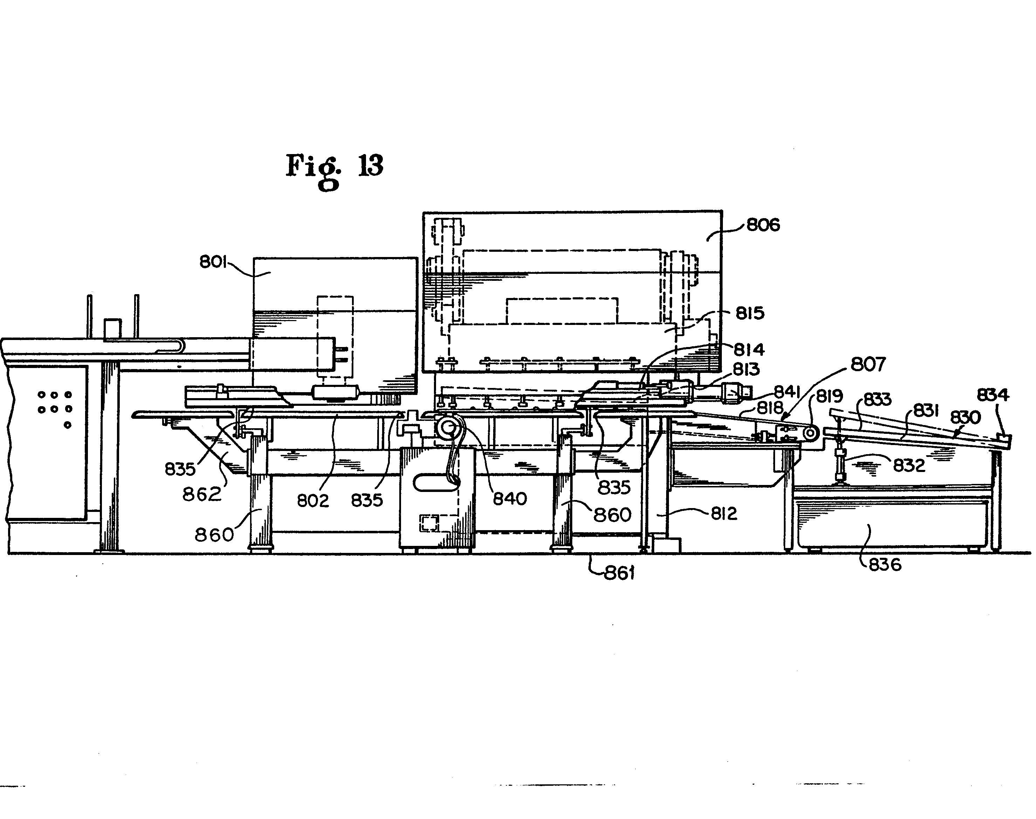

As best illustrated in Figure 13, the shear 806 includes a frame member 812 on which supported a lower shearing blade 813 and an upper shearing blade 814 suspended from a ram member 815 which is suspended to the frame for movement towards and away from the lower shear blade 813.

The discharge assembly 807 includes a endless conveyor 818 powered by motor means 819 under control of the computer 810. The conveyor extends into the area immediately behind the front blades 820 of the shear 806 and terminates adjacent the side blades 821 thereof and is positioned to receive product sheared by those blades as well as final waste product released from the grippers 804 interiorly of the shear blades. The conveyor conveys workpieces to a sorter stacker 830 which includes a movable shelf 831 which may, for example, be elevated by hydraulic cylinders 832 under control of the computer 810. When in a first position, illustrated in solid lines of Figure 13, the top surface 833 is positioned to receive discharged final workpieces from the conveyor 818. As the workpieces accummulate on the surface 833, the hydraulic cylinder 832 can be lowered to accommodate stacking of the workpieces on the surface 833, it being understood that the surface 833 is preferably slanted as illustrated, so as to allow the workpieces to slide downwardly against stop 834. The surface 833 may be provided with anti-friction members such as roller balls of the type commonly used on worktables. When the piece coming from the conveyor 818 is not a product workpiece, being either trim or waste, extension of the hydraulic cylinder 832 under control of the computer 810 will cause the member 831 to be elevated to allow the waste to drop from the end of the conveyor under member 831 and into a storage bin or receptacle 836. By placing the waste receptacle 836 under member 831 and in association with the stagging device 830, and by locating the same to the side of the shear, we have avoided the necessity of workers entering the area of the shear itself to either withdraw finished product or waste scrap well at the same time eliminating any necessity for multiple conveyors associated with the area within the confines of the shear housing.

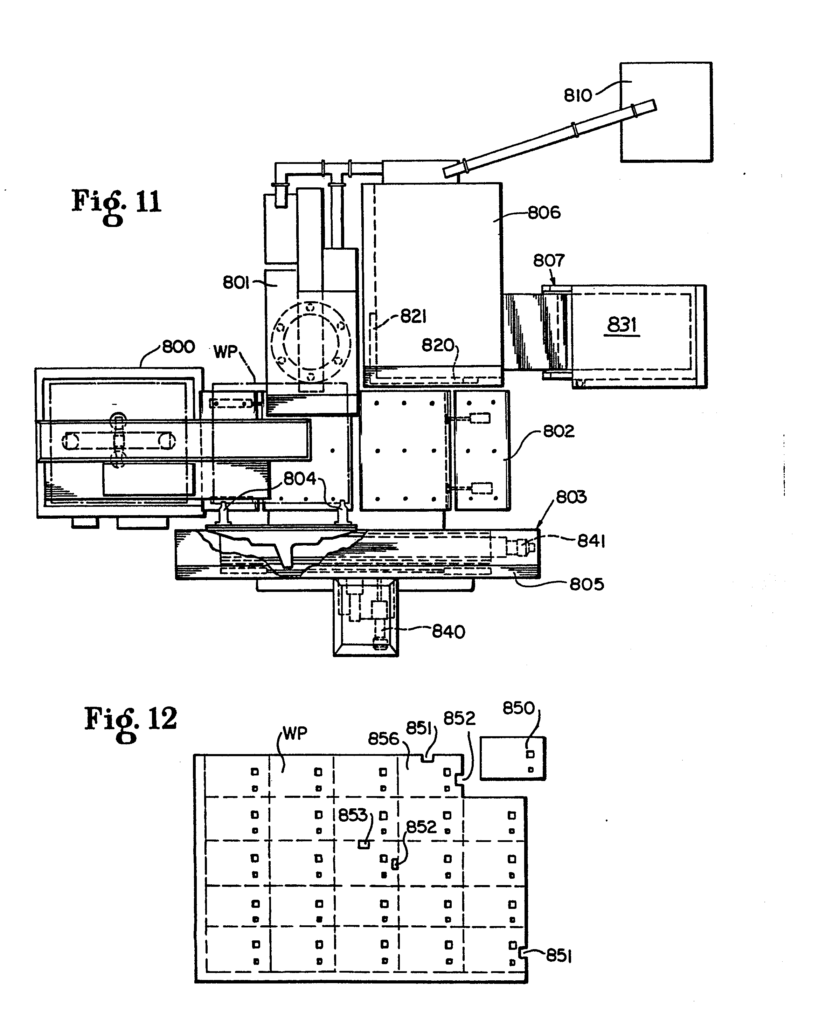

As best illustrated in Figures 11 and 12, a common worktable is associated with the punch 801 and shear 806. The worktable 802 may include support members 860 resting on the floor or other support surface 861 and including outward table extensions 862 supported from the supports 860. The table is preferably of the type which mounts the workpiece positioning system 803 in front of the punch and shear and the table is therefore provided with slots allowing the runner support for the carriage to be accessible to the carriage for movement of the carriage towards and away from the shear and punch. Movement of the carriage is controlled by motor means 840. The carriage is equipped with separate motor means 841 for movement of the grippers along the length of the carriage. The worktable preferably has a length extending from beyond the side of the punch remote from the shear to beyond the end of the front shear blade remote from the punch. The grippers preferably are provided with a movement range over substantially the enire length of the worktable whereby a workpiece WP may be positioned at any point along the length of the worktable. The device may be equipped with progressive move systems, allowing the grippers to release and regrip the workpiece at a different position, and the worktable, if desired, may have extensions thereof extending backwardly along the side of the punch both on the side of the punch remote from the shear and between the shear and punch.

The automatic control is preferably of the type which will provide only for operation of the shear at a time when the punch is not being operated and only for operation of the punch at the time the shear is not being operated, whereby the workpiece can be positioned with respect to either the punch or the shear with portions of the workpiece being within the operative range of the other of the punch or shear.

One distinct advantage of the combined system shown in Figure 11 and 13 is illustrated in Figure 12. In that figure, a workpiece WP, which is to be divided into twenty five separate workpieces, is illustrated. A single finished workpiece 850 has been illustrated as having been sheared from the main workpiece WP. In prior systems, if it were desired to provide edge removal, such as is illustrated at 851 and 852, for some or all of the individual workpieces, the individual finished workpieces would either have to be presheared from the main sheet before presentation to the punch, subjected to a separate operation after separation by the shear subsequent to punching, or punched with tools having a straight side which could be aligned with the line along which shearing was later to take place. However, particularly when using light gauge material, use of such straight sided tools would produce a roughness in the sheared away edge and any misalignment or misgauging between the punch and the shear could produce a notched edge on the sheared away piece. For this reason, only edge notching or edge punching done at the original edges of the workpiece, such as shown at 851, could normally be provided without either separate operations after severance of the individual workpieces or preseverance of many small workpieces and individually loading of those workpieces into the punch machine. Our invention, on the other hand, allows the edge notching or punching to occur on at least two edges of each workpiece sheet, as shown at 852 and 853. This is accomplished by initially finish punching the adjacent workpiece, such as, for example, workpiece 850, then shearing that workpiece by the shear 806, then returning the main the workpiece WP to the punch and edge punching or notching the newly exposed side edge to produce the material removal at 852. This can be accomplished for each of the individual workpieces desired, and allows such edge notching or punching to be accomplished economically and without the necessity to use flat sided punch tools.

It will be appreciated that in our invention the worktable preferably has a height equal to the throat opening height of the punch and the shear has a height for the operating opening, preferably equal to the height of the throat opening of the punch and the height of the shear. The shear, may, be equipped with hold-downs and may further, if desired, be equipped with internal workpiece support devices, all of which are known in the art. It can therefore be seen from the above that our invention provides a novel sheet material machine tool which includes both a punch and a shear commonly fed from a common worktable equipped with a common workpiece positioning system, all under the control of a common computer. The system preferably also includes automatic loading, gauging and discharge systems.

It may be understood that variations and modifications may be effected without departing from the spirit and scope of the novel concepts of this invention.

CLAIMS

1. A sheet material punching and shearing assembly comprising in combination: an automatic controller, a punch press having upper and lower punch and die tools, power means controlled by the controller for activating one of said tools to move it towards and away from the other tool to punch a sheet material workpiece placed therebetween, a right angle shear having upper and lower shearing edges, each having a portion positioned normal to a remaining portion, second power means controlled by said controller for activating one of said edges to move it towards and away from the other of said edges to shear a sheet material workpiece placed therebetween, said punch press and right angle shear positioned adjacent one another, a worktable positioned adjacent the press and shear having a workpiece movement system associated therewith including a workpiece carriage supported for movement above the worktable towards and away from the press and shear, third power means controlled by said controller for moving the carriage, workpiece gripper carried by the carriage movable back and forth along a length of said carriage, said grippers operable to grip a sheet material workpiece and to move the same along with said grippers and carriage, fourth power means controlled by said controller for moving said grippers along said carriage, said carriage having a length along which the grippers can move effective to allow positioning of a workpiece carried by the gripper relative to each of the punch and shear, and said carriage having a range movement towards and away from the punch and shear effective to allow positioning of a workpiece carried by the grippers relative to each of the punch and shear, said positioning including a range whereby substantially the entirety of the workpiece can be presented at a work station of the punch between the punch and die tools and substantially the entirety of the workpiece can be positioned at a corner of the shearing edges representing the intersections of the portions of the shearing edges, whereby substantially the entirety of a workpiece carried by the grippers can be worked upon by the punch and shear, and said controller automatically controlling the punch press, the shear, the gripper movement and the carriage movement whereby a workpiece received in said grippers can be automatically punch and sheared into a plurality of semi-finished individual workpieces without necessitating removal of the original workpiece from the assembly.

2.   A machine tool for sheet material workpiece comprising in combination:

      (a)    a right angle shear machine having upper and lower front and side shearing blades,- each of said blades having two shearing edges disposed at a right angle to one another and power means for moving the upper shearing blade past the lower shearing blade for shearing material placed therebetween and for returning the upper shearing blade to a rest position spaced above the lower shearing blade, a blade clearance opening between said blades when at the rest position for insertion of a workpiece,

      (b)    a punch machine having a work station with upper punch and lower die tools, a ram at said work station for moving said punch tool relative to said die tool to punch material placed between said punch tool and said die tool, a throat opening at said work station for insertion of workpieces into the work station between the punch tool and die tool, power means for moving said ram,

      (c)    said punch machine and shear machine being placed in side-by-side adjacent close spaced relation with a corner of the shear blades at the intersection of said edges being positioned at the corner of the shear machine adjacent the punch machine,

(d) a worktable positioned at a front of the punch and shear, the worktable having a length extending from beyond one side of the punch work station remote from the shear to beyond the farthest edge of the front blade of the shear machine remote from the punch machine and a width extending away from the punch and shear,

(e) a workpiece positioning system associated with said worktable including a carriage moveable across the width of the worktable from a position adjacent the punch and shear to a position remote from the punch and shear, said carriage carrying grippers moveable along the length of the worktable, said grippers being operable to grip a workpiece on the worktable and to move the workpiece relative to the worktable, said grippers having a travel length effective to move a gripped workpiece from a position where the entirety of the workpiece lies on the side of the punch work station remote from the shear to a position where the entirety of the workpiece lies to the side of the shear blade corner remote from the punch machine,

(f) an automatic gauging system associated with said workpiece positioning system for ·automatically gauging the workpiece in X and Y axes directions,

(g) an automatic controller means for controlling the punch machine, the shear machine and the workpiece positioning system and gauging system.

3. The machine tool of claim 2, including an automatic parts loader effective to load workpieces one at a time from a stack of workpieces onto the worktable for engagement by the grippers, said loader being controlled by said controller means.

4. The machine tool of claim 3, including automatic discharge means from said shear, said discharge means including a conveyor means positioned behind the shear blades, said conveyor means discharging to a side of the shear remote from the punch machine, a workpiece sorter receiving parts discharged from said conveyor, said workpiece sorter having a first area for receipt of finished pieces and a second area for receipt of scrap pieces, and means for sorting the parts discharged from the conveyor into the first and second areas, the means for sorting being controlled by said controller means.

5. An automatic machine tool for sheet material comprising a punch machine having a work station for punching sheet material, a right angle shear having blades disposed at a right angle to one another for severing variously sized rectangular parts from a workpiece, a workpiece supporting table, a workpiece positioning system associated with said table associated with said table for automatically moving a workpiece over said table and into desired position with respect to the work station and the shear blades, means for loading workpieces one at a time onto said work station, means for discharging semifinished workpieces from said shear, an automatic gauging system for gauging said workpieces with respect to control of the workpiece positioning system, and a automatic for automatically controlling each of the punch, shear, workpiece positioning system, gauging system, loader and discharge system, whereby a workpiece may be automatically loaded, gauged, punched, sheared and discharged by said machine tool without human intervention and without the necessity for regauging the workpiece between punching and shearing operations.

Fig. 1

**Fig. 2**

Fig. 3

**Fig. 4**

**Fig. 5**

Fig. 6

Fig. 7

Fig. 8

0102646

## Fig. 9

## Fig. 10

**Fig. 11**

**Fig. 12**

# Fig. 13

**European Patent Office**

**EUROPEAN SEARCH REPORT**

Application number

## DOCUMENTS CONSIDERED TO BE RELEVANT

EP 83108785.3

| Category | Citation of document with indication, where appropriate, of relevant passages | Relevant to claim | CLASSIFICATION OF THE APPLICATION (Int. Cl. ³) |
|---|---|---|---|
| Y | US - A - 3 834 213 (HENZLER)<br>* Totality *<br>-- | 1,2,5 | B 23 P 23/00<br>B 21 D 28/06 |
| D,Y | US - A - 4 213 733 (DE GEORGE)<br>* Column 1, lines 35-44; column 2, lines 9-18; column 4, lines 14-39; fig. 1,2 *<br>-- | 1,2,5 | |
| D,Y | US - A - 3 874 260 (ROCH)<br>* Column 2, lines 18-42; fig. 1,2 *<br>-- | 1,2,5 | |
| Y | US - A - 4 297 927 (KURODA)<br>* Column 1, lines 17-44; column 2, lines 21-25; fig. 1 *<br>-- | 1,2,5 | |
| A<br>P | CH - A5 - 636 027 (SCHULER GMBH)<br>* Page 3, lines 59,60; fig. 1,2 *<br>-- | 3 | **TECHNICAL FIELDS SEARCHED (Int. Cl. ³)**<br><br>B 21 D 28/00<br>B 21 D 43/02<br>B 23 P 23/00 |
| A | DE - B - 1 752 701 (HÄMMERLE)<br>* Column 4, lines 6-36; fig. 1 *<br>---- | 4 | B 26 D 5/00<br>B 26 D 7/00<br>B 26 D 9/00<br>B 25 J 13/00 |

The present search report has been drawn up for all claims

| Place of search | Date of completion of the search | Examiner |
|---|---|---|
| VIENNA | 30-11-1983 | KREHAN |